# EUROPEAN PATENT SPECIFICATION

(11) **EP 2 524 757 B1**
(45) Date of publication and mention of the grant of the patent: **12.02.2014**
(21) Application number: 12168188.6
(22) Date of filing: 16.05.2012
(51) Int. Cl.: B23D 47/00, B27B 5/065, B23Q 5/04, B23Q 5/10

(54) **A panel saw machine**
Plattensägenmaschine
Machine de scie à panneau

(30) Priority: 16.05.2011 IT BO20110274
(43) Date of publication of application: 21.11.2012
(73) Proprietor: GIBEN INTERNATIONAL S.p.A., 40065 Pianoro (Bologna) (IT); Politecnico di Milano, 20133 Milano (IT)
(72) Inventor: Benuzzi, Piergiorgio, 40141 BOLOGNA (IT); Mapelli, Ferdinando Luigi, 23854 OLGINATE (LECCO) (IT); Tarsitano, Davide, 21042 CARONNO PERTUSELLA (VARESE) (IT)
(74) Representative: Puggioli, Tommaso

(56) References cited:
- EP-A1- 2 233 236
- WO-A1-2005/042215
- WO-A1-2009/013583
- DE-C- 496 358
- FR-A- 915 364
- US-A- 5 828 554

## Description

This invention relates to a panel saw machine for wooden panels or the like, such as, for example, slabs of plastic materials, slabs of non-ferrous metal, or slabs of cement or plasterboard, as per the preamble of claim 1.

Panel saw machines of known type, **one example of which is disclosed in** WO2005/042215**,** are used to cut panels of various sizes, usually placed one over the other in stacks of predetermined height.

These panel saw machines essentially comprise a horizontal work table to support the stacks of panels to be cut; a panel movement unit or pusher, movable along a horizontal direction X, for moving the panels along the work table; and a rotary blade cutting device or unit for cutting the panel or the stack of panels movable along a cutting direction Y transversal to the direction X. The cutting unit comprises a carriage, movable along the direction Y, fitted with an electric motor for driving the blades. The panel saw machines comprise electric motors for driving the cutting unit and the movement unit for moving them forward, respectively, along the directions X and Y.

With particular reference to the cutting unit, the respective drive comprises, for example, a brushless electric motor which is part of an electric drive unit by which the work cycles for the panel saw machine are set up.

In general, the cutting unit performs, along the direction Y, at least one forward stroke, for cutting, and a return stroke by which it prepares for a new cutting action.

At the end of every stroke, the cutting unit must be stopped before reversing the motion for the next stroke and the braking action is generally controlled by the electric drive unit without the intervention of mechanical bakes.

As is known, the electric drive unit is associated with one or more braking resistors, generally in banks, because, when the electric motor for moving the cutting unit is braking, it acts like an electricity generator driven by the kinetic energy stored by the cutting unit itself, providing energy to the electric drive unit.

After exceeding a predetermined voltage value the energy produced is absorbed by the braking resistor and converted into heat which is dissipated into the environment.

The kinetic energy accumulated by the cutting unit in its strokes is due, mainly, to the weight of the cutting unit, determined, schematically, by the weight of the carriage, the cutting blade, the cutter (if any), the systems for moving the blades relative to the carriage and, mainly, the motor for driving the blades, that is to say, the weight of the carriage and of all the mechanical components mounted on it.

The known panel saw machines therefore have several disadvantages.

Under normal operating conditions a significant quantity of energy is dissipated and lost.

The heat produced in braking is lost in the environment with consequent heating of the environment.

The positioning of the braking resistors may be problematic due also to the current workplace regulations.

In this context, the main purpose of this invention is to provide a panel saw machine that is free of the above mentioned disadvantages.

One aim of this invention is to provide a panel saw machine where the energy consumption is generally reduced and the efficiency is optimised with a consequent cost saving.

Another aim of the invention is to provide a panel saw machine which performs better than the prior art solutions in terms of acceleration and speed of the moving parts.

The technical purpose indicated and the aims specified are substantially achieved by a panel saw machine according to claim 1.

Further features and advantages of the invention are more apparent in the approximate and hence nonlimiting description of a preferred, non-exclusive embodiment of a panel saw machine, illustrated in the accompanying drawings in which:
- Figure 1 is a schematic plan view from above of a panel saw machine according to this invention, partly in blocks, with some parts cut away;
- Figure 2 illustrates a detail of the panel saw machine of Figure 1 in a schematic front view, partly in blocks, with some parts cut away in order to better illustrate others;
- Figure 3 is a diagram of an electric drive unit forming part of the panel saw machine according to this invention.

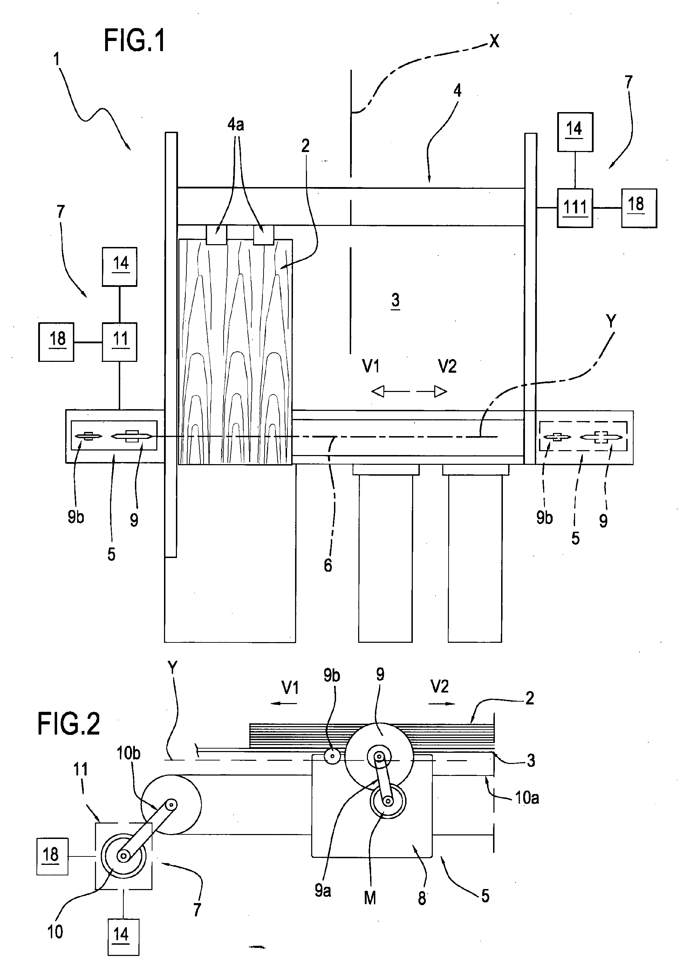

With reference to the accompanying drawings, in particular Figure 1, the numeral 1 denotes a panel saw machine or cutting machine for panels 2 according to this invention.

The panel saw machine 1 will be described in detail below solely for the parts necessary for the understanding of this invention.

The panel saw machine 1 comprises a work table 3 for supporting the panels 2, a unit 4 for moving the panels which is movable, for moving the panels 2 on the work table 3, between a first operating position and a second operating position along a feed direction (X).

In the configuration illustrated, the movement unit 4 is equipped with grippers 4a for picking up the panels 2.

The panel saw machine 1 also comprises a rotary blade cutting unit 5, for cutting the panels 2, which is movable between a first operating position, shown by a dashed line in Figure 1, and a second operating position along a cutting direction (Y) transversal to the feed direction (X) so as to form a cutting line 6.

The panel saw machine 1 comprises drive means 7 for moving the cutting unit 5 and the movement unit 4 between the respective first and second operating positions.

With particular reference to the cutting unit 5, it should be noted that the cutting unit, having defined a working cycle for the panel saw machine 1, makes, in use, a plurality of forward strokes in a direction V1 and return strokes in a direction V2 along the cutting line 6.

A forward stroke is preferably defined by the passage of the cutting unit 5 from the first operating position to the second operating position whilst a return stroke is defined by the return from the second operating position to the first operating position.

Advantageously, the first and the second operating positions are located at the opposite ends of the cutting line 6.

During the forward stroke a cutting action is performed on the panels 2 whilst with the return stroke the cutting unit 5 is repositioned for a subsequent cutting action.

At the end of each forward and return stroke the cutting unit 5 is subjected to a braking phase for bringing the speed to 0 so that it is able to restart the next stroke in the opposite direction. As will become clearer as this description continues, the braking phases are generally controlled and managed by controlling the feeding of the units in movement, both as regards the cutting unit 5 and the unit 4 for moving the panels.

The cutting unit 5, schematically illustrated by way of an example in Figure 2, comprises a carriage 8 movable along the direction Y, a rotary blade 9 supported by the carriage 8, a second blade or cutter 9b not described in more detail, an electric motor M for driving the blade 9, for example by a transmission 9a.

The panel saw machine 1, and in particular the above-mentioned drive means 7, comprise an electrical machine 10 designed, preferably and in a substantially known manner, for moving the carriage along the axis Y.

In one example embodiment, the electrical machine 10 is of the rotary type, such as a brushless motor or a DC motor; in other example embodiments the electrical machine of the linear type 10.

In the example illustrated, means 7 for driving the cutting unit 5 comprise a closed-loop belt 10a for pulling the carriage 8 and a transmission belt 10b operating between the electrical machine 10, of the rotary type, and the belt 10a.

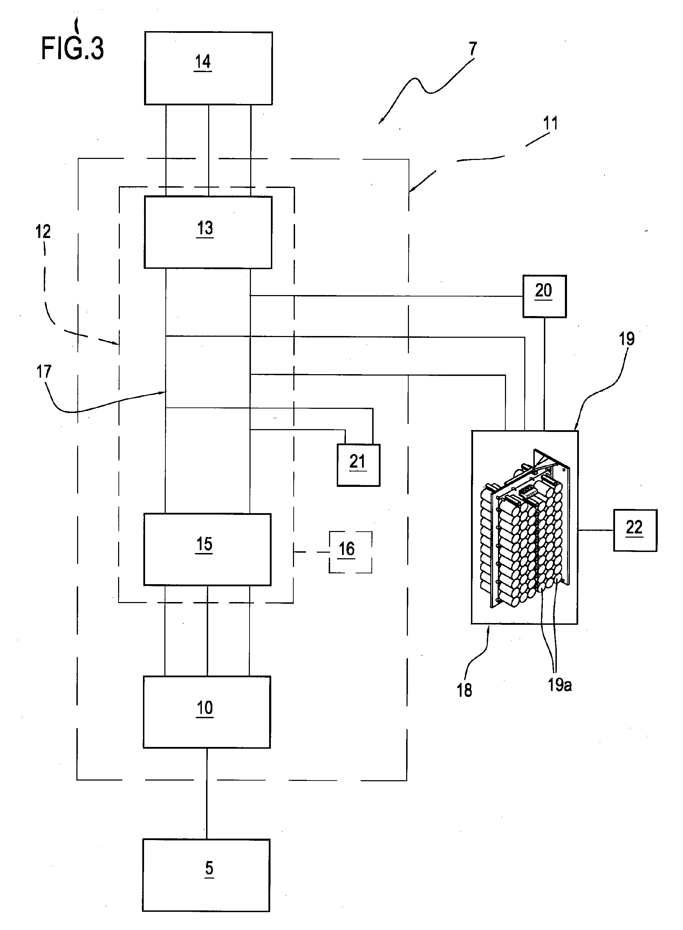

With reference in particular to Figure 3, it should be noted that the above-mentioned drive means 7 comprise an electric drive unit 11 for moving and activating the cutting unit 5.

The drive unit 11 comprises the electrical machine 10 and a static converter 12 for supplying the electrical machine 10.

Schematically, the static converter 12, of substantially known type, comprises a rectifier stage 13 connectable to a supply network 14 and a modulation stage 15, supplied by the rectifier stage 13 and connected at the input to the electrical machine 10 for supplying the electrical machine.

As is known, the drive unit 11 comprises a first control stage 16, schematically represented by a corresponding block and not described further since it is of known type, which supervises the operation of the converter 12 and therefore the operation, in the specific case of the example, of the cutting unit 5.

Between the rectifier stage 13 and the modulation stage 15 there is an intermediate DC stage 17.

The static converter 12 supervises the operation of the drive unit 11 and in particular causes and makes the above-mentioned forward and reverse strokes and the braking phases which are, as mentioned above, also obtained by the drive and not by mechanical brakes.

According to this invention, the above-mentioned drive means 7 comprise energy recovery means 18 for recovering the energy produced by the drive means 7 in the above-mentioned braking phases.

In the embodiment illustrated, the energy recovery means 18 are defined by a bank 19 of capacitors 19a.

The capacitors 19a recover the electricity, storing it in a substantially known manner.

In practice, in the preferred embodiment, the recovery means 18 store the energy recovered for subsequently returning it to the panel saw machine 1 as described in more detail below.

The capacitors 19a are connected to the converter 12 in the intermediate stage 17.

Advantageously, the converter 12 is of the two-way type, that is, it allows a flow of energy from the supply network 14 towards the load, formed in this case by the cutting unit 5, and a flow of energy from the load, that is, the cutting unit 5, to the supply network 14.

In practice, this allows the capacitors 19a to store energy during the above-mentioned braking phases of the cutting unit 5, when the energy flows from the load to the network, and to return it, at another time, to the supply network.

Preferably, the energy stored is returned to the converter 12 when the cutting unit 5 restarts at the end of each stroke.

In other words, the electricity network 14 forms a primary power supply source and, in the forward and return strokes of the cutting unit 5, the energy flows from the source 14, through the converter 12, to the electrical machine 10 and then to the cutting unit 5.

In these circumstances, the electrical machine 10 acts as a motor.

In the braking phase, the electrical machine 10 acts as an electricity generator, that is, it receives mechanical energy, in the form of kinetic energy, from the cutting unit 5, and transforms it into available electricity, in practice, to the terminals of the electrical machine 10.

This available energy at the terminals of the electrical machine 10 is, at the end of the braking phases, stored in the bank of capacitors 19.

The bank of capacitors 19 is in communication with the drive means 7 for supplying the drive means 7 with at least part of the energy recovered.

Advantageously, the energy stored in the capacitors 19a is made available to the drive unit and in particular to the electrical machine 10, for the forward or return stroke, after the braking in which the energy has been stored.

The energy contribution made available by the bank of capacitors 19 is subtracted from the energy absorbed by the supply network 14.

In other words, the total power supplied to the drive unit 11 is given by a contribution absorbed by the supply network 14 and by a contribution due to the bank of capacitors 19.

In this way, the absorption of energy from the network 14 for moving the cutting unit 5 is considerably reduced with a consequent saving in and reduction of operating costs.

To optimise the storage of energy in the capacitors, the panel saw machine 1 comprises a circuit 20 for pre-loading the capacitors 19a acting between the bank 19 and a power supply source.

In the preferred embodiment, the pre-loading circuit 20 is directly supplied from the converter 12, as schematically illustrated in Figure 3.

The circuit 20 allows the capacitors to be preloaded before they are put into service for the energy recovery.

After pre-loading, the circuit 20 separates the capacitors 19a from the selected source, for example by actuating a remote control switch not illustrated.

As schematically illustrated in Figure 3, the means 7 for driving the panel saw machine 1 preferably comprise a braking resistor 21 supplied by the converter 12.

The thresholds for intervention of the resistor 21 are selected as a function of the thresholds for intervention of the bank of capacitors 19.

The resistor 21 allows any energy produced in the braking phase and not stored by the capacitors 19a to be discharged, for example in the case of a fault of the capacitors.

Given the high voltages which may be measured at the terminals of the bank of capacitors 19 at the end of the braking phases, in the order of hundreds of volts for the panel saw machines 1 of the most common size, the panel saw machine 1 comprises a safety system 22 for discharging the voltage if the energy stored is not reabsorbed by the electrical machine 10.

For example, the capacitors 19a are discharged by the safety system 22 when the machine stops when the last braking is not followed by a subsequent forward stroke which would absorb the energy stored.

In practice, when the panel saw machine 1 stops or to avoid risks for persons, the energy stored in the capacitors 19a is dissipated by the safety system 22 if it is not reabsorbed by the converter. In an embodiment illustrated schematically in Figure 1 and also referable to the diagram of Figure 3, the energy recovery means 18 are operatively connected to the unit 4 for moving the panels 2.

In more detail, the drive means 7 comprise at least one second electric drive unit 111 for moving the unit 4 for moving the panels 2.

The second electric drive unit 111 comprises a second static converter, not illustrated, similar to the converter 12 and suitably dimensioned, and at least one second electrical machine, not illustrated, which move the movement unit 4 forwards towards the cutting line 6 and backwards to a retracted position, according to substantially known work cycles and methods.

The movement unit 4 is therefore also subject to an alternating movement where a forward stroke is followed by a return stroke and vice versa.

The forward and return steps of the movement unit 4 are separated from each other by corresponding braking phases during which the electrical machine, as explained above with reference to the cutting unit 5, acts as an electricity generator, making a quantity of electricity available at its terminals. In this embodiment, the energy recovery means 18 comprise a second bank of capacitors, not illustrated, connected to the second converter 111 in the intermediate stage of the converter for storing the energy produced in the braking phase, where the kinetic energy of the movement unit 4 actuates the second electrical machine which acts as an electricity generator, and transfers it to the same electrical machine for the following acceleration, whether it is for a forward or return stroke.

In use, a process for controlling the panel saw machine 1 therefore comprises the steps of supplying electricity drawn from a supply network 14 to the drive means 7 to advance the cutting unit 5 and/or the movement unit 4 for execution of a respective forward or return stroke of the cutting unit 5 and/or the movement unit 4 between the respective first and second operating positions or vice versa.

The controlling comprises a step of braking the cutting unit 5 and/or the movement unit 4 at the end of each stroke.

As mentioned above, during the braking the electrical machine 10 with reference to the cutting unit 5 or its corresponding one in the unit 4 for moving the panels 2, acts as a generator and produces electricity available at its terminals. With reference for the sake of simplicity only to the cutting unit 5, the controlling therefore comprises a step of recovering the electricity produced by the electrical machine 10 during the braking.

According to this invention, the process for controlling the panel saw machine 1 comprises the work table 3 for supporting the panels 2, the unit 4 for moving the panels 2 on the work table 3, movable between the first operating position and the second operating position along the feed direction X, the cutting unit 5 movable, for cutting the panels 2, between the first operating position and the second operating position along the cutting direction Y transversal to the feed direction X, the drive means 7 for moving the cutting unit 5 between the respective first and second operating positions and for moving the movement unit 4 between the respective first and second operating positions, comprising a step of supplying electricity drawn from a supply network 14 to the drive means 7 to advance the cutting unit 5 and/or the movement unit 4 for execution of a stroke of the cutting unit 5 and/or the movement unit 4 between the respective first and second operating positions or vice versa; a step of braking the cutting unit 5 and/or the movement unit 4 at the end of the above-mentioned stroke; a step of recovering the energy produced by the drive means 7 in the braking phase.

According to what has been indicated, the energy recovered is stored in the capacitors 19a and, preferably, made available for the stroke of the relative unit following the braking.

It should be noted that the insertion, loading and unloading of the capacitors 19a towards the actuation supply line, in particular towards the DC stage 17, occurs in a substantially known manner, as a function of the voltages at the terminals of the bank 19.

The controlling process therefore comprises a step of supplying the drive means 7 for the panel saw machine 1.

More in detail, the process comprises a step of supplying the cutting unit 5 with the contribution of the energy stored in the capacitors 19.

In practice, for each stroke of the cutting unit 5 following a braking phase the energy used by the drive means 7 is defined by a component absorbed by the network and by the contribution released by the capacitors 19a.

As mentioned above, for the purposes of safety, if the energy stored in the capacitors 19a is not absorbed by the drive means 7, the controlling comprises a step for implementing safety with the discharging of the accumulated energy by the safety system 20.

It should be noted that this basic and operational layout is independent of the type of electrical machine used for moving forward the cutting unit and/or the panel movement unit.

The electrical machines used may be, as already indicated, of any substantially known type, rotary or linear, with or without brushes, suitably equipped with adequate systems for transmitting the motion, if necessary, to the unit moved.

The invention as described achieves significant advantages.

The use of a system for recovering energy, the kinetic energy of the cutting unit and/or of the panel movement unit, which is then supplied to the respective drive units for the strokes immediately following the braking, allows a saving of the energy absorbed by the network.

In the panel saw machine according to this invention, the energy produced in the braking phases, of the cutting unit and/or the movement unit, which is normally dissipated in heat, is regenerated as electricity thus allowing an improvement of the performance of the machine in acceleration.

The braking resistors can be reduced and resized, thus implying the dispersion of a smaller quantity of heat compared to prior art solutions.

The adoption in the panel saw machine of the bank of capacitors for the energy recovery therefore allows an energy saving, an improvement in the efficiency of the entire system as well as an environmental advantage.

In effect, the energy recovery implies a reduction in the so-called Carbon Footprint, that is, the emission of CO2, which is the measurement of the impact which human activities have on the environment in terms of increasing the greenhouse gases produced, measured in units of carbon dioxide.

## Claims

1. A panel saw machine for panels (2) comprising a work table (3) for supporting the panels (2), a panel (2) movement unit (4), for moving the panels (2) on the work table (3), movable between a first operating position and a second operating position along a feed direction (X), a cutting unit (5) for cutting the panels (2), movable between a first operating position and a second operating position along a cutting direction (Y) transversal to the feed direction (X), drive means (7) for moving the cutting unit (5) between the respective first and second operating positions and for moving the movement unit (4) between the respective first and second operating positions, the panel saw machine being **characterised in that** the drive means (7) comprise energy recovery means (18) for recovering the energy produced by the drive means (7) during a braking phase of the cutting unit (5) and/or the movement unit (4), the recovery means (18) comprising a plurality of capacitors (19a) for storing the energy produced in the braking phase.

2. The machine according to claim 1, where the energy recovery means (18) are in communication with the drive means (7) for supplying the drive means (7) with at least part of the energy recovered by the recovery means (18).

3. The panel saw machine according to claim 1 or 2, where the drive means (7) comprise a first electric drive unit (11) for moving the cutting unit (5), the first electric drive unit (11) comprising a first static converter (12) and a first electrical machine (10), the recovery means (18) being in communication with the first electric drive unit (11) for receiving the energy produced by the first electrical machine (10) on braking of the cutting unit (5) during which the electrical machine (10) constitutes an electricity generator.

4. The panel saw machine according to any of the foregoing claims, where the drive means (7) comprise at least one braking resistor (21) for discharging the energy produced in the braking phase and not recovered.

5. The panel saw machine according to any of the foregoing claims, where the recovery means (18) comprise a safety system (21) for dissipating, on stopping the panel saw machine, at least partly the energy accumulated in the braking phase.

6. The panel saw machine according to any of the foregoing claims, where the drive means (7) comprise at least a second electric drive unit (111) for moving the movement unit (4), the second electric drive unit (111) comprising a second static converter and a second electrical machine, the recovery means (18) being in communication with the second electric drive unit (111) for receiving the energy produced by the second electrical machine on braking of the movement unit (4) during which the second electrical machine constitutes an electricity generator.

7. A process for controlling a panel saw machine (1) comprising a work table (3) for supporting the panels (2), a unit (4) for moving the panels (2) on the work table (3), movable between a first operating position and a second operating position along a feed direction (X), a cutting unit (5) for cutting the panels (2), movable between a first operating position and a second operating position along a cutting direction (Y) transversal to the feed direction (X), drive means (7) for moving the cutting unit (5) between the respective first and second operating positions and for moving the movement unit (4) between the respective first and second operating positions, the process comprising the steps of:
supplying electricity drawn from a supply network (14) to the drive means (7) to advance the cutting unit (5) and/or the movement unit (4) for execution of a stroke of the cutting unit (5) and/or the movement unit (4) between the respective first and second operating positions or vice versa;
braking of the cutting unit (5) and/or the movement unit (4) at the end of the stroke;
the process being **characterised in that** it comprises a step for recovering energy produced by the drive means (7) during the braking step, the energy produced in the braking phase being stored in a plurality of capacitors (19a) for storing the energy produced in the braking phase and regenerated as electricity.

8. A process according to claim 7, comprising a step for supplying the drive means (7) with the stored energy.

9. A process according to claim 7 or 8, comprising a step for dissipating the stored energy by means of a safety system (21).

## Patentansprüche

1. Plattensägemaschine für Platten (2), umfassend einen Arbeitstisch (3) zum Halten der Platten (2), eine Fördereinheit (4) zum Fördern der Platten (2), um die Platten (2) auf den Arbeitstisch (3) zu fördern, bewegbar zwischen einer ersten Betriebsposition und einer zweiten Betriebsposition entlang einer Zuführungsrichtung (X), eine Schneideeinheit (5) zum Schneiden der Platten (2), bewegbar zwischen einer ersten Betriebsposition und einer zweiten Betriebsposition entlang einer Schneiderichtung (Y), die quer zur Zuführungsrichtung (X) verläuft, Antriebsmittel (7) zum Verfahren der Schneideeinheit (5) zwischen der jeweiligen ersten und zweiten Betriebsposition und zum Verfahren der Fördereinheit (4) zwischen der jeweiligen ersten und zweiten Betriebsposition, wobei die Plattensägemaschine **dadurch gekennzeichnet ist, dass** die Antriebsmittel (7) Energierückgewinnungsmittel (18) umfassen, um die von den Antriebsmitteln (7) während einer Bremsphase der Schneideeinheit (5) und/oder der Fördereinheit (4) erzeugte Energie rückzugewinnen, wobei die Rückgewinnungsmittel (18) eine Vielzahl von Kondensatoren (19a) umfassen, um die in der Bremsphase erzeugte Energie zu speichern.

2. Maschine nach Anspruch 1, wobei die Energierückgewinnungsmittel (18) mit den Antriebsmitteln (7) in Kommunikation sind, um die Antriebsmittel (7) mit mindestens einem Teil der durch die Rückgewinnungsmittel (18) rückgewonnenen Energie zu speisen.

3. Plattensägemaschine nach Anspruch 1 oder 2, wobei die Antriebsmittel (7) eine erste elektrische Antriebseinheit (11) umfassen, um die Schneideeinheit (5) zu verfahren, und die erste elektrische Antriebseinheit (11) einen ersten statischen Umrichter (12) und eine erste elektrische Maschine (10) umfasst, wobei die Rückgewinnungsmittel (18) in Kommunikation mit der ersten elektrischen Antriebseinheit (11) sind, um die von der ersten elektrischen Maschine (10) beim Bremsen der Schneideeinheit (5), bei dem die elektrische Maschine (10) einen Stromerzeuger darstellt, zu empfangen.

4. Plattensägemaschine nach einem der vorhergehenden Ansprüche, wobei die Antriebsmittel (7) mindestens einen Bremswiderstand (21) umfassen, um die in der Bremsphase erzeugte und nicht rückgewonnene Energie zu entladen.

5. Plattensägemaschine nach einem der vorhergehenden Ansprüche, wobei die Rückgewinnungsmittel (18) ein Sicherheitssystem (21) umfassen, um die in der Bremsphase gespeicherte Energie beim Stoppen der Plattensägemaschine zumindest teilweise abzuführen.

6. Plattensägemaschine nach einem der vorhergehenden Ansprüche, wobei die Antriebsmittel (7) mindestens eine zweite elektrische Antriebseinheit (111) umfassen, um die Fördereinheit (4) zu verfahren, und die zweite elektrische Antriebseinheit (111) einen zweiten statischen Umrichter und eine zweite elektrische Maschine umfasst, wobei die Rückgewinnungsmittel (18) in Kommunikation mit der zweiten elektrischen Antriebseinheit (111) sind, um die von der zweiten elektrischen Maschine beim Bremsen der Fördereinheit (4), bei dem die zweite elektrische Maschine einen Stromerzeuger darstellt, erzeugte Energie zu empfangen.

7. Verfahren zur Steuerung einer Plattensägemaschine (1), umfassend einen Arbeitstisch (3) zum Halten der Platten (2), eine Einheit (4) zum Fördern der Platten (2) auf den Arbeitstisch (3), bewegbar zwischen einer ersten Betriebsposition und einer zweiten Betriebsposition entlang einer Zuführungsrichtung (X), eine Schneideeinheit (5) zum Schneiden der Platten (2), bewegbar zwischen einer ersten Betriebsposition und einer zweiten Betriebsposition entlang einer Schneiderichtung (Y), die quer zur Zuführungsrichtung (X) verläuft, Antriebsmittel (7) zum Verfahren der Schneideeinheit (5) zwischen der jeweiligen ersten und zweiten Betriebsposition und zum Verfahren der Fördereinheit (4) zwischen der jeweiligen ersten und zweiten Betriebsposition, wobei das Verfahren folgende Schritte umfasst:
Speisung der Antriebsmittel (7) mit aus einem Versorgungsnetz (14) entnommenem Strom, um die Schneideeinheit (5) und/oder die Fördereinheit (4) vorzuschieben, um einen Hub der Schneideeinheit (5) und/oder der Fördereinheit (4) zwischen der jeweiligen ersten und zweiten Betriebsposition oder umgekehrt auszuführen;
Bremsen der Schneideeinheit (5) und/oder der Fördereinheit (4) am Ende des Hubs;
wobei das Verfahren **dadurch gekennzeichnet ist, dass** es einen Schritt umfasst, um die von den Antriebsmitteln (7) während des Bremsschritts erzeugte Energie rückzugewinnen, wobei die in der Bremsphase erzeugte Energie in einer Vielzahl an Kondensatoren (19a) gespeichert wird, um die in der Bremsphase erzeugte und als Strom regenerierte Energie zu speichern.

8. Verfahren nach Anspruch 7, umfassend einen Schritt zum Speisen der Antriebsmittel (7) mit der gespeicherten Energie.

9. Verfahren nach Anspruch 7 oder 8, umfassend einen Schritt zum Abführen der gespeicherten Energie mittels eines Sicherheitssystems (21).

## Revendications

1. Machine à scier des panneaux pour des panneaux (2) comprenant une table de travail (3) servant à supporter les panneaux (2), une unité de déplacement (4) des panneaux (2) servant à déplacer les panneaux (2) sur la table de travail (3), mobile entre une première position fonctionnelle et une seconde position fonctionnelle le long d'une direction d'alimentation (X), une unité de découpe (5) servant à découper les panneaux (2), mobile entre une première position fonctionnelle et une seconde position fonctionnelle le long d'une direction de découpe (Y) transversale à la direction d'alimentation (X), des moyens d'entraînement (7) servant à déplacer l'unité de découpe (5) entre les première et seconde positions fonctionnelles respectives et à déplacer l'unité de déplacement (4) entre les première et seconde positions fonctionnelles respectives, la machine à scier des panneaux étant **caractérisée en ce que** les moyens d'entraînement (7) comprennent des moyens de récupération d'énergie (18) servant à récupérer l'énergie produite par les moyens d'entraînement (7) lors d'une phase de freinage de l'unité de découpe (5) et/ou de l'unité de déplacement (4), les moyens de récupération (18) comprenant une pluralité de condensateurs (19a) servant à stocker l'énergie produite au cours de la phase de freinage.

2. Machine selon la revendication 1, dans laquelle les moyens de récupération d'énergie (18) sont en communication avec les moyens d'entraînement (7) pour alimenter les moyens d'entraînement (7) avec au moins une partie de l'énergie récupérée par les moyens de récupération (18).

3. Machine à scier des panneaux selon les revendications 1 ou 2, dans laquelle les moyens d'entraînement (7) comprennent une première unité d'entraînement électrique (11) servant à déplacer l'unité de découpe (5), la première unité de découpe électrique (11) comprenant un premier convertisseur statique (12) et une première machine électrique (10), les moyens de récupération (18) étant en communication avec la première unité d'entraînement électrique (11) pour recevoir l'énergie produite par la première machine électrique (10) lors du freinage de l'unité de découpe (5) durant lequel la machine électrique (10) constitue un générateur électrique.

4. Machine à scier des panneaux selon l'une quelconque des revendications précédentes, dans laquelle les moyens d'entraînement (7) comprennent au moins une résistance de freinage (21) servant à décharger l'énergie produite au cours de la phase de freinage et non récupérée.

5. Machine à scier des panneaux selon l'une quelconque des revendications précédentes, dans laquelle les moyens de récupération (18) comprennent un système de sécurité (21) servant à dissiper, lors de l'arrêt de la machine à scier des panneaux, au moins en partie l'énergie accumulée lors de la phase de freinage.

6. Machine à scier des panneaux selon l'une quelconque des revendications précédentes, dans laquelle les moyens d'entraînement (7) comprennent au moins une seconde unité d'entraînement électrique (111) servant à déplacer l'unité de déplacement (4), la seconde unité d'entraînement électrique (111) comprenant un second convertisseur statique et une seconde machine électrique, les moyens de récupération (18) étant en communication avec la seconde unité d'entraînement électrique (111) pour recevoir l'énergie produite par la seconde machine électrique lors du freinage de l'unité de déplacement (4) durant lequel la seconde machine électrique constitue un générateur électrique.

7. Procédé de contrôle d'une machine à scier des panneaux (1) comprenant une table de travail (3) servant à supporter les panneaux (2), une unité (4) servant à déplacer les panneaux (2) sur la table de travail (3), mobile entre une première position fonctionnelle et une seconde position fonctionnelle le long d'une direction d'alimentation (X), une unité de découpe (5) servant à découper les panneaux (2), mobile entre une première position fonctionnelle et une seconde position fonctionnelle le long d'une direction de découpe (Y) transversale à la direction d'alimentation (X), des moyens d'entraînement (7) servant à déplacer l'unité de découpe (5) entre les première et seconde positions fonctionnelles respectives et à déplacer l'unité de déplacement (4) entre les première et seconde positions fonctionnelles respectives, le procédé comprenant les étapes :
d'alimentation des moyens d'entraînement (7) en électricité tirée d'un réseau de distribution (14) pour faire avancer l'unité de découpe (5) et/ou l'unité de déplacement (4) pour l'exécution d'une course de l'unité de découpe (5) et/ou de l'unité de déplacement (4) entre les première et seconde positions fonctionnelles respectives ou vice versa ;
de freinage de l'unité de découpe (5) et/ou de l'unité de déplacement (4) à la fin d'une course ;
le procédé étant **caractérisé en ce qu'**il comprend une étape servant à récupérer l'énergie produite par les moyens d'entraînement (7) lors de l'étape de freinage, l'énergie produite lors de la phase de freinage étant stockée dans une pluralité de condensateurs (19a) servant à stocker l'énergie produite lors de la phase de freinage et qui est régénérée comme de l'électricité.

8. Procédé selon la revendication 7, comprenant une étape servant à alimenter les moyens d'entraînement (7) avec l'énergie stockée.

9. Procédé selon les revendications 7 ou 8, comprenant une étape servant à dissiper l'énergie stockée au moyen d'un système de sécurité (21).
